# FASCICULE DE BREVET EUROPEEN

(11) **EP 3 583 757 B1**
(45) Date de publication et mention de la délivrance du brevet: **26.06.2024**
(21) Numéro de dépôt: 18710091.2
(22) Date de dépôt: 20.02.2018
(51) Int. Cl.: H04W 36/00, H04W 36/14

(54) **PROCÉDÉ DE CHANGEMENT DE RÉSEAU MOBILE**
VERFAHREN ZUM WECHSELN EINES MOBILNETZES
METHOD FOR CHANGING MOBILE NETWORK

(30) Priorité: 20.02.2017 FR 1751329
(43) Date de publication de la demande: 25.12.2019
(73) Titulaire: Orange, 92130 Issy-les-Moulineaux (FR)
(72) Inventeur: DOREE, José, 92326 Châtillon Cedex (FR); LE ROUZIC, Jean-Claude, 92326 Châtillon Cedex (FR)
(86) Numéro de dépôt international: PCT/FR2018/050388
(87) Numéro de publication internationale: WO 2018/150150

(56) Documents cités:
- US-A1- 2011 238 845
- US-A1- 2012 239 771
- US-A1- 2016 037 390
- NOKIA SIEMENS NETWORKS ET AL: "Discussion about correct call leg handling alternatives", 3GPP DRAFT; S2-086701_DISC-CORRELATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. China; 20081007, 7 October 2008 (2008-10-07), XP050331314, [retrieved on 2008-10-07]

## Description

La présente invention concerne les réseaux de communications de type IP (« *Internet Protocol* »), et notamment ceux parmi les réseaux IP qui sont aptes à mettre en oeuvre des protocoles de contrôle de session évolués. Les réseaux IP permettent la diffusion de données conversationnelles, dans le cadre de services tels que « Voix sur IP » (VoIP), « Partage de Contenu », ou « Messagerie Instantanée ».

Plus particulièrement, la présente invention concerne les changements de réseau mobile de la part d'un terminal mobile (par souci de brièveté, on dira simplement « terminal » par la suite) en cours de communication. On parle de « basculement de la communication » (« *handover* » en anglais), ou de « transfert d'accès », lorsqu'un terminal communique via un coeur de réseau IP auquel il appartient, en passant d'abord par un premier accès, dit initial, puis par un deuxième accès, dit cible, à ce coeur de réseau (on dit qu'un terminal « appartient » à un réseau IP donné lorsque l'utilisateur de ce terminal possède un compte auprès de l'opérateur de ce réseau IP, et ce, quel que soit l'accès utilisé par l'utilisateur pour se connecter au réseau IP). Ce basculement, qui peut être, par ex7emple, déclenché par une dégradation de la qualité de transmission sur le réseau mobile initial, peut concerner tout ou partie des flux média associés à la communication et/ou de la signalisation : on parle alors de transfert total ou partiel de la communication.

Les protocoles de contrôle de session évolués classiques, tels que le protocole SIP (initiales des mots anglais « *Session Initiation Protocol* » signifiant « Protocole d'initiation de Session »), utilisent des messages dits de « signalisation », qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole SIP a été défini par l'IETF (*Internet Engineering Task Force*) dans le document RFC 3261. Ce protocole permet l'établissement, la modification et la terminaison de sessions multimédia dans un réseau utilisant le protocole IP. Le protocole SIP a ensuite été étendu notamment dans le document RFC 3265. Cette extension définit des procédures de notification d'événements.

On rappelle que les services de communication sur réseau IP peuvent identifier des ressources physiques ou virtuelles au moyen de chaînes de caractères, par exemple des « URI » (initiales des mots anglais « *Uniform Resource Identifier*» signifiant « Identifiant Uniforme de Ressource »). La syntaxe des URI est définie dans le document RFC 3986 de l'IETF ; la connaissance de l'URI d'une ressource permet (par exemple, au moyen d'une requête DNS) d'obtenir l'adresse IP d'un équipement du réseau de l'opérateur gérant cette ressource.

En particulier, dans les réseaux mettant en oeuvre le protocole SIP, on distingue deux types d'identifiants de ressource : ceux de la forme « SIP-URI » telle que définie dans le document RFC 3261 de l'IETF, ou ceux de la forme « tel-URI » telle que définie dans le document RFC 3966 de l'IETF. Une SIP-URI est de la forme « user@host » (par exemple, alice@domaine1), où la partie « host » identifie le domaine de l'opérateur responsable de l'identité représentée par la partie « user ». Une tel-URI est de la forme « tel:numéro_de_téléphone » (par exemple, tel:+33123456789) en référence aux numéros de téléphone publics internationaux, ou de la forme « tel:numéro_de_téléphone;phone-context=... » (par exemple, tel:0623456789;phone-context=+33) en référence aux numéros de téléphone attribués par un opérateur pour son réseau privé.

Ce protocole SIP est utilisé notamment dans les infrastructures de type IMS (initiales des mots anglais « *IP Multimedia Subsystem* » signifiant « Sous-système Multimédia sur IP »).

L'architecture IMS a été introduite par le 3GPP pour les réseaux mobiles, puis reprise par TISPAN (« *Télécommunications and Internet Converged Services and Protocols for Advanced Networking* ») pour les réseaux fixes. Cette architecture permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en oeuvre une politique de gestion, fournir une Qualité de Service prédéterminée, et calculer les montants à facturer aux clients. L'IMS permet actuellement d'accéder à des services de type téléphonie, visiophonie, Présence et Messagerie Instantanée, dont elle gère aussi l'interaction.

Chaque utilisateur d'un réseau IMS peut y être identifié au moyen de diverses identités, dont l'IMPI (initiales des mots anglais « *IP Multimedia Private Identity* » signifiant « Identité Privée pour IP Multimédia ») et l'IMPU (initiales des mots anglais « *IP Multimedia PUblic identity* » signifiant « Identité Publique pour IP Multimédia »).

L'IMPI est défini dans la spécification TS 23.228 du 3GPP. L'IMPI est une identité affectée de manière permanente par l'opérateur d'un réseau à une souscription auprès de cet opérateur, et est utilisé, par exemple, pour l'enregistrement, l'autorisation d'accès, l'administration des services offerts à l'utilisateur, et la facturation (on notera qu'un utilisateur peut avoir plusieurs IMPI au sein de la même souscription ; on peut ainsi associer chaque IMPI à un terminal différent). L'IMPI a la forme d'un NAI (initiales des mots anglais « *Network Access Identifier* » signifiant « Identifiant d'Accès Réseau »), tel que défini dans le document RFC 4282 de l'IETF. On notera que dans la plupart des réseaux mobiles actuels, l'IMPI est dérivée de l'identifiant IMSI (International Mobile Subscriber Identity) stocké dans la carte SIM (Subscriber Identity Module) ; il est alors facile d'établir une correspondance entre ces deux identités ; en particulier, l'IMSI est, inversement, déductible de l'IMPI.

Un utilisateur se sert de son IMPU pour communiquer avec d'autres utilisateurs. L'IMPU se présente sous la forme d'une URI ou d'un numéro court, ou encore d'un alias quelconque. Dans un réseau mobile, une partie de l'IMPU correspond au numéro de téléphone public (i.e. à l'usage des tiers) de l'utilisateur, appelé MSISDN (initiales des mots anglais « *Mobile Station ISDN Number* » signifiant « Numéro ISDN de Station Mobile ») ; il existe donc une corrélation directe entre IMPU et MSISDN.

On notera que, pour un IMPI donné, il peut y avoir plusieurs IMPU (par exemple, une tel-URI et une SIP-URI).

On notera également qu'un IMPU peut être partagé, de manière à ce que plusieurs terminaux (par exemple, téléphones, smartphones, ou tablettes) puissent être joints avec la même identité publique (par exemple, un numéro de téléphone unique pour toute une famille d'utilisateurs). Chacun de ces terminaux est distingué par une identité privée (IMPI) qui lui est propre. Un exemple courant d'une telle configuration multi-terminaux est le cas « multi-SIM » : un utilisateur qui souscrit à cette option dispose de plusieurs cartes SIM (et donc plusieurs IMSI), qui peuvent être joints au moyen du même numéro de téléphone public MSISDN.

Toutes ces identités d'un utilisateur sont configurées par l'opérateur lors de la création d'un compte auprès de cet opérateur, et exploitées lors de l'attachement et de l'enregistrement de l'utilisateur sur le réseau.

En particulier, un même terminal, lorsqu'il est « multimode », peut s'attacher et s'enregistrer auprès d'un coeur de réseau IP par le biais de plusieurs types de réseaux mobiles, tels qu'un réseau GSM (Global System for Mobile Communications), un réseau UMTS (Universal Mobile Telecommunications System), un réseau WiFi (normes du groupe IEEE 802.11), ou un réseau LTE (Long Term Evolution). Un terminal multimode offre la possibilité à son utilisateur de choisir le meilleur réseau possible pour établir une communication. Les critères de choix appliqués relèvent généralement de l'utilisateur ou de l'opérateur du réseau IP : politique tarifaire de l'opérateur, qualité de la communication, bande passante disponible, et ainsi de suite.

De nos jours, il existe un grand intérêt pour les services de téléphonie sur LTE (« *Voice over LTE* », ou VoLTE, en anglais), ainsi que pour les services de visiophonie sur LTE (« *Video over LTE* », ou ViLTE, en anglais). Dans ce cadre, il a été envisagé qu'en cas de nécessité on puisse basculer une communication d'un réseau mobile LTE vers un réseau mobile GSM ou UMTS ; un tel basculement est techniquement complexe, car il faut notamment assurer la continuité d'un appel téléphonique initié dans un réseau à commutation de paquets (« *packet-switched* », ou PS, en anglais) et poursuivi dans un réseau à commutation de circuits (« *circuit-switched* », ou CS, en anglais).

Ainsi, les normes TS 23.237 (stage 2) et TS 24.237 (stage 3) du 3GPP (Third Génération Partnership Project) définissent des mécanismes de transfert d'accès pour le basculement depuis un réseau LTE vers un réseau GSM ou UMTS, et offrent aux opérateurs souhaitant mettre en oeuvre de tels transferts d'accès deux types de procédures. Le premier type est appelé « SRVCC » (initiales des mots anglais « *Single Radio Voice Call Continuity* » signifiant « Continuité d'Appel Vocal Radio Unique »). Le second type est appelé « eSRVCC » (initiales des mots anglais « *enhanced Single Radio Voice Call Continuity* » signifiant « Continuité d'Appel Vocal Radio Unique Optimisée »). Ces deux types de procédures utilisent un serveur d'applications (« *Application Server* », ou AS, en anglais) dédié, appelé SCC-AS (d'après les initiales des mots anglais « *Service Centralization and Continuity* » signifiant « Centralisation et Continuité de Service »), pour gérer la signalisation reçue de la part des terminaux au moment du basculement.

La procédure eSRVCC en particulier utilise, outre le SCC-AS, des entités appelées ATCF (initiales des mots anglais « *Access Transfer Control Function* » signifiant Fonction de Commande de Transfert d'Accès) et ATGW (initiales des mots anglais « *Access Transfer Gateway* » signifiant passerelle de Transfert d'Accès), qui sont placées sur le segment d'accès au coeur de réseau. La signalisation est ancrée dans l'ATCF, et le flux média est ancré dans l'ATGW. Cet ancrage n'est pas modifié lors du transfert d'accès, si bien que le SCC-AS n'a pas besoin d'indiquer au terminal distant une modification du flux média. Cette seconde procédure permet de réduire les temps de coupure de la communication vocale au moment du transfert d'accès par rapport à une procédure de type SRVCC, car la procédure eSRVCC intervient sur les flux média au plus près de l'utilisateur pour lequel elle est déclenchée, alors que la procédure SRVCC nécessite une renégociation complète entre les deux utilisateurs impliqués dans la communication. L'intérêt du eSRVCC par rapport au SRVCC, outre le fait de diminuer le nombre d'échanges de signalisation, est donc de pouvoir basculer les flux média au plus près de l'utilisateur changeant de réseau, pour que l'interruption du média soit la plus courte possible.

Le choix de la procédure à appliquer repose sur l'analyse par le SCC-AS des caractéristiques du flux média telles que transmises dans la signalisation lors du transfert : si le flux média n'est pas modifié, on peut appliquer la procédure eSRVCC ; si le flux média est modifié, on doit appliquer la procédure SRVCC.

Dans les deux architectures (i.e. SRVCC et eSRVCC), lors du transfert d'accès vers le domaine circuit, l'identifiant de l'utilisateur transmis au SCC-AS ou à l'ATCF est le numéro de téléphone public MSISDN. Or, dans le cas d'un abonnement multi-terminaux, lors du transfert d'accès de l'un de ces terminaux, il n'est pas possible de déterminer quel terminal de l'ensemble des terminaux de l'abonné a changé de réseau mobile, puisque le seul identifiant transmis par le domaine circuit est le MSISDN, qui est, comme expliqué ci-dessus, associé à l'identité publique de l'utilisateur. Autrement dit, lorsqu'un utilisateur dispose de plusieurs terminaux partageant la même identité publique, il est impossible de savoir, le cas échéant, lequel de ces terminaux a participé à une procédure de transfert d'accès.

On peut consulter à cet égard la demande US 2011238845, qui concerne les techniques de transfert de session mises en oeuvre par une entité SCC-AS dans un domaine IMS. Ladite entité SCC-AS comprend des moyens pour :
- enregistrer, pour chacune d'une pluralité de sessions de communication en cours, un élément d'informations de session comprenant une identité d'utilisateur identifiant un terminal participant à la session et un premier identifiant du terminal dans un domaine CS du réseau de communication, ladite identité d'utilisateur étant associée à une pluralité de terminaux et ledit premier identifiant comprenant au moins un MSISDN, un IMSI ou un GRUU (Globally Routable Unique User),
- recevoir une requête de transfert de session, ladite requête de transfert de session demandant le transfert d'une session associée à un deuxième identifiant de dispositif inclus dans la requête, le deuxième identifiant de dispositif identifiant un terminal dans le domaine CS et comprenant au moins un MSISDN, un IMSI ou un GRUU,
- comparer le deuxième identifiant de dispositif reçu avec la pluralité de premiers identifiants de dispositif enregistrés, et
- identifier, sur la base de cette comparaison, une session en cours particulière à laquelle la requête de transfert de session reçue se rapporte.

Cette demande US 2011238845 précise toutefois que, pour que l'entité SCC-AS puisse identifier la session à transférer, le MSISDN du terminal dans le domaine CS ne doit pas être partagé par une pluralité de terminaux dans le domaine IMS. Par ailleurs, cette demande concerne le transfert d'un terminal *appelant*, et n'enseigne pas comment identifier un terminal particulier objet d'un transfert parmi une pluralité de terminaux *appelés.*

Le document US 2016/0037390 décrit des composants d'un réseau de télécommunications configurés pour gérer un basculement d'une session de communication d'un équipement utilisateur, comme par exemple une session de communication d'urgence.

Le document NOKIA SIEMENS NETWORKS ET AL: "Discussion about correct call leg handling alternatives", no. China; 20081007, 7 octobre 2008 (2008-10-07), XP050331314 décrit des solutions permettant de corréler des segments d'appels (call legs) CS and SIP en situation de transfert de domaine lorsqu'un utilisateur utilise plus d'un terminal partageant une même identité publique.

Dans l'état de l'art, le basculement d'une communication à laquelle participe un terminal faisant partie d'un ensemble de plusieurs terminaux mobiles n'est donc pas possible : toute tentative de mise en oeuvre d'une procédure SRVCC ou d'une procédure e-SRVCC est vouée à l'échec, faute de pouvoir identifier le terminal impliqué dans le basculement.

La présente invention concerne donc, selon un premier aspect, un procédé de changement de réseau mobile, comprenant les étapes suivantes :
- détection qu'il devient nécessaire de basculer une communication à laquelle participe un terminal depuis un premier réseau mobile connecté à un réseau IP, vers un second réseau mobile connecté au même réseau IP,
- transmission par un premier centre de gestion appartenant audit premier réseau mobile à un second centre de gestion appartenant audit second réseau mobile de l'identifiant IMSI dudit terminal,
- envoi dudit identifiant IMSI au coeur de réseau IP par ledit second centre de gestion,
- réception par une entité de contrôle des transferts d'accès d'une requête de changement de réseau mobile contenant ledit identifiant IMSI, et
- identification de l'adresse de contact du terminal par ladite entité de contrôle des transferts d'accès au moyen de l'identifiant IMSI.

Ledit procédé est remarquable en ce que, lors de l'enregistrement dudit terminal auprès dudit réseau IP, un serveur d'enregistrement en charge du terminal a obtenu ledit identifiant IMSI et l'a fait parvenir à ladite entité de contrôle des transferts d'accès.

Ainsi, l'invention propose la modification :
- de la procédure classique exécutée pour un terminal lors de son enregistrement sur un réseau IP, et
- des procédures d'identification classiques exécutées par les entités de contrôle des transferts d'accès.

On notera que le réseau IP auquel s'applique l'invention peut être non seulement un réseau IMS, mais aussi tout réseau IP compatible avec des procédures de transfert d'accès analogues aux procédures SRVCC et eSRVCC.

On notera également que la procédure d'enregistrement modifiée selon l'invention est en particulier applicable dans le cas d'une configuration multi-terminaux. En effet, l'identification d'un terminal (appelant ou appelé) faisant l'objet d'un changement de réseau mobile parmi une pluralité de terminaux appartenant au même utilisateur peut être réalisée par simple consultation de la liste, ainsi constituée, des identifiants IMSI de ces terminaux.

Grâce à ces dispositions, une entité de contrôle des transferts d'accès en charge de l'utilisateur peut identifier sans ambigüité un terminal de cet utilisateur impliqué dans un changement de réseau mobile. On assure ainsi notamment le succès des transferts d'accès en situation de souscription multi-terminaux.

Selon des caractéristiques particulières, après avoir obtenu ledit identifiant IMSI, ledit serveur d'enregistrement le fait parvenir à une entité SCC-AS.

Selon des caractéristiques encore plus particulières, après avoir reçu ledit identifiant IMSI, ladite entité SCC-AS le transmet à une entité ATCF.

Selon d'autres caractéristiques particulières, après avoir obtenu ledit identifiant IMSI, ledit serveur d'enregistrement le fait parvenir à une entité ATCF.

Grâce à ces dispositions, au moins l'une des entités de contrôle des transferts d'accès (SCC-AS et/ou ATCF) en charge de l'utilisateur peut, dans le cas d'une configuration multi-terminaux, être informée de l'identifiant IMSI de chacun des terminaux de cet utilisateur. Cette entité de contrôle des transferts d'accès pourra donc aisément identifier l'adresse de contact de l'un de ces terminaux qui ferait ensuite l'objet d'un changement de réseau mobile.

Selon un deuxième aspect, l'invention concerne divers dispositifs.

Elle concerne ainsi, premièrement, un serveur d'enregistrement dans un réseau IP, comprenant des moyens pour, lors de l'enregistrement auprès dudit réseau IP d'un terminal dont ledit serveur d'enregistrement a la charge, obtenir l'identifiant IMSI dudit terminal et le faire parvenir à une entité de contrôle des transferts d'accès.

L'invention concerne aussi, deuxièmement, une entité de contrôle des transferts d'accès dans un réseau IP constituée par une entité SCC-AS, et comprenant des moyens pour recevoir de la part d'un serveur d'enregistrement, et enregistrer, l'identifiant IMSI d'un terminal.

Selon des caractéristiques particulières, cette entité de contrôle des transferts d'accès comprend en outre des moyens pour transmettre l'identifiant IMSI d'un terminal à une entité ATCF.

L'invention concerne aussi, troisièmement, une entité de contrôle des transferts d'accès dans un réseau IP constituée par une entité ATCF, et comprenant des moyens pour recevoir de la part de la part d'un serveur d'enregistrement ou d'une entité SCC-AS, et enregistrer, l'identifiant IMSI d'un terminal.

Selon des caractéristiques particulières, l'une quelconque des entités de contrôle des transferts d'accès décrites succinctement ci-dessus comprend en outre des moyens pour :
- recevoir une requête de changement de réseau mobile concernant un terminal, ladite requête contenant l'identifiant IMSI dudit terminal, et
- identifier l'adresse de contact du terminal au moyen dudit identifiant IMSI.

Les avantages offerts par ces dispositifs sont essentiellement les mêmes que ceux offerts par les procédés succinctement exposés ci-dessus.

Selon un troisième aspect, l'invention concerne un système de communication dans un réseau IP, comprenant :
- au moins un serveur d'enregistrement tel que décrit succinctement ci-dessus, et
- au moins une entité de contrôle des transferts d'accès telle que décrite succinctement ci-dessus.

Les avantages offerts par ce système de communication sont essentiellement les mêmes que ceux offerts par les procédés succinctement exposés ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour gérer le fonctionnement d'un serveur d'enregistrement tel que décrit succinctement ci-dessus, ou d'une entité de contrôle des transferts d'accès telle que décrite succinctement ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 illustre les étapes mises en oeuvre classiquement dans la procédure SRVCC,
- la figure 2a représente schématiquement une architecture réseau utilisée classiquement pour la procédure eSRVCC,
- la figure 2b illustre les étapes mises en oeuvre classiquement dans la procédure eSRVCC, et
- la figure 3 illustre les étapes mises en oeuvre classiquement au cours d'un enregistrement dans la procédure eSRVCC.

Les procédures SRVCC et eSRVCC étant conçues pour fonctionner de préférence avec les réseaux IP de type IMS, on va commencer par quelques rappels concernant ce type de réseau.

Lorsqu'un usager souhaite bénéficier des services offerts par un réseau IMS, il émet vers le réseau des messages de signalisation pouvant inclure notamment divers types de requêtes.

Tout d'abord, le dispositif-client de l'usager doit, sauf exceptions (telles que certains appels d'urgence), s'enregistrer sur le réseau en lui envoyant une requête appelée « SIP REGISTER ». Lorsque le réseau est incapable de faire le lien entre cet enregistrement et un enregistrement précédent (par exemple suite à une panne réseau, ou suite à un arrêt du dispositif-client pendant une durée supérieure à une valeur prédéterminée), l'enregistrement est considéré comme étant un enregistrement initial. Après un enregistrement initial, le dispositif-client de l'usager doit envoyer périodiquement au réseau une requête pour confirmer qu'il souhaite maintenir son enregistrement.

Pour pouvoir enregistrer les dispositifs-clients, les réseaux IMS comprennent un ou plusieurs serveurs d'enregistrement, appelés « S-CSCF » (initiales des mots anglais « *Serving-Call Server Control Function* » signifiant « Fonction de Commande de Session d'Appel Serveuse »), aptes (entre autres fonctions) à gérer la procédure d'enregistrement des dispositifs connectés au réseau.

Les réseaux IMS comprennent en outre un ou plusieurs serveurs d'interrogation, appelés « I-CSCF » (initiales des mots anglais « *Interrogating-Call Server Control Function* » signifiant « Fonction de Commande de Session d'Appel Interrogatrice ») - d'ailleurs souvent combinés physiquement avec les serveurs d'enregistrement S-CSCF pour constituer des serveurs d'appel dénotés « I/S-CSCF » - qui, au moment de l'enregistrement d'un dispositif-client, interrogent un serveur de données d'abonné appelé « HSS » (initiales des mots anglais «*Home Subscriber Server*» signifiant « Serveur d'Abonné de Rattachement »), afin de pouvoir sélectionner un serveur S-CSCF possédant les caractéristiques qui sont obligatoirement (et, le cas échéant, optionnellement) requises pour atteindre le niveau de service souscrit par l'usager. Les serveurs HSS contiennent chacun une base de données-clients, et sont donc l'équivalent dans les réseaux IP des serveurs « HLR » (initiales des mots anglais « *Home Location Register* » signifiant « Registre de Localisation de Rattachement ») utilisés dans les réseaux GSM. Chaque serveur HSS contient les souscriptions IMS des abonnés de l'opérateur ainsi que leurs profils de services. En particulier, la spécification TS 29.228 (Section B.1 et figure B.1.1 en particulier) du 3GPP prévoit de pouvoir provisionner dans la souscription de l'utilisateur d'un terminal mobile, l'IMSI du terminal au même titre que son identité privée.

Les réseaux IMS comprennent en outre :
- un (ou plusieurs) serveur(s) de messagerie vocale : un serveur de messagerie vocale gère la souscription du dispositif-client aux événements de dépôt/consultation des messages de l'utilisateur de ce dispositif-client, et notifie le dispositif-client lors de l'occurrence de ces événements ;
- un (ou plusieurs) serveur(s) de présence : un serveur de présence gère la souscription du dispositif-client aux événements de présence que l'utilisateur de ce dispositif-client souhaite surveiller, et notifie le dispositif-client lors de l'occurrence de ces événements ; et
- un (ou plusieurs) serveur(s) de téléphonie : un serveur de téléphonie gère les services téléphoniques auxquels l'utilisateur du dispositif-client a souscrits auprès de son opérateur, tels que la présentation du numéro ou le renvoi d'appel.

Les serveurs de messagerie vocale, les serveurs de présence et les serveurs de téléphonie sont des exemples de ce que l'on appelle des « serveurs d'applications » (« *application servers* », ou AS, en anglais).

Le serveur S-CSCF qui a été attribué à l'utilisateur authentifie cet utilisateur, et télécharge ensuite le profil-utilisateur à partir du serveur HSS. Ce profil contient des informations sur les services auxquels cet utilisateur a droit. Les informations sont stockées sous la forme de « critères de filtre initiaux » (« *initial Filter Criteria* », ou iFC, en anglais). Le S-CSCF envoie alors un message appelé « enregistrement de tiers » (« *third party registration* » en anglais) à tous les serveurs d'application. Le corps de ce message contient des informations de service en langage XML et/ou la requête SIP REGISTER d'origine et/ou la réponse 200 OK à la requête SIP REGISTER d'origine. Le but de l'enregistrement de tiers est de faire savoir aux serveurs d'application que cet utilisateur est disponible sur le réseau (par exemple, le TAS arrêtera de transférer les appels destinés à cet utilisateur vers sa Boîte Vocale).

L'utilisateur peut alors faire usage desdits services pendant la session en cours. Il peut par exemple s'agir de services offerts automatiquement à tous les utilisateurs du réseau IMS. Il peut aussi s'agir de services auxquels cet utilisateur a souscrit auprès de l'opérateur du réseau, et qui sont mis automatiquement à sa disposition. Enfin, il peut s'agir de services dont l'utilisateur peut faire usage après avoir émis une requête appropriée (SIP SUBSCRIBE). Ces services comprennent des applications audiovisuelles telles que mentionnées ci-dessus. Il peut s'agir également d'une souscription à l'état d'une ressource, auquel cas des notifications d'évènement (SIP NOTIFY) sont envoyées au dispositif-client dès lors que l'état de la ressource change.

Les réseaux IMS comprennent en outre un ou plusieurs serveurs appelés « P-CSCF » (initiales des mots anglais « *Proxy-Call Server Control Fonction* » signifiant « Fonction de Commande de Session d'Appel Mandataire »). Pour chaque dispositif-client connecté à un réseau IMS, il existe un serveur P-CSCF servant d'entité de raccordement entre le coeur de réseau IMS et le réseau mobile utilisé par ce dispositif-client ; ainsi, toute la signalisation SIP échangée entre le dispositif-client d'une part, et le serveur d'interrogation I-CSCF ou le serveur d'enregistrement S-CSCF d'autre part, passe par le serveur P-CSCF.

Enfin, les réseaux IMS comprennent des passerelles média, telles que l'IMS-AGW (IMS Access Gateway). Une « passerelle média » est une entité responsable, sous le contrôle d'un serveur P-CSCF, de l'ouverture et de la fermeture des portes entre le réseau mobile et le coeur de réseau sur le plan média ; l'entité « passerelle média » est également en charge de la police du trafic, ainsi que du marquage des flux média sur le plan de la Qualité de Service.

Concernant les réseaux mobiles pouvant s'interconnecter à un réseau IMS, on va s'intéresser ci-dessous aux réseaux CS de type GSM ou UMTS, et aux réseaux PS de type LTE.

On rappelle que les réseaux CS comprennent notamment :
- une ou plusieurs stations de base (appelées « Node B » en UMTS) ; et
- un ou plusieurs centres de gestion, appelés « MSC » (Mobile Switching Center) ; un centre de gestion MSC est généralement associé à une passerelle média MGW (Media Gateway) située à la frontière entre le réseau mobile CS et le réseau IMS ; le point d'accès dans le coeur de réseau IMS est un serveur I-CSCF.

Les réseaux PS comprennent notamment :
- une ou plusieurs stations de base, appelées « eNode B » ;
- au moins un centre de gestion MME (Mobility Management Entity) ; un centre de gestion MME est généralement associé à une passerelle média PGW (PDN Gateway) située à la frontière entre le réseau mobile CS et le réseau IMS ; le point d'accès dans le coeur de réseau IMS est un serveur P-CSCF ;
- au moins une passerelle SGW (Serving Gateway) : la SGW route et transmet les paquets de données d'utilisateur, et fait aussi office de point d'ancrage de mobilité pour les données d'utilisateur lors des transferts entre stations de base eNode B, ainsi que de point d'ancrage lors des transferts entre un réseau LTE et un réseau mettant en oeuvre une autre technologie 3GPP ; et
- au moins une passerelle PGW, mentionnée ci-dessus : la PGW fournit la connectivité entre l'UE et les réseaux à paquets de données (« *Packet Data Networks* », ou PDN, en anglais) externes, en servant de point d'entrée et de sortie du trafic pour l'UE ; un terminal mobile peut être connecté simultanément à plusieurs PGW pour avoir accès à plusieurs PDN ; la PGW assure l'exécution de la politique réseau, le filtrage de paquets pour chaque utilisateur, l'assistance à l'imputation, l'interception légale et l'auscultation de paquets.

Les changements de réseau mobile considérés ci-dessous comprennent notamment le basculement d'une communication depuis un centre de gestion MME du réseau LTE vers un centre de gestion MSC du réseau GSM ou UMTS.

On va décrire à présent la procédure SRVCC, en puisant dans les articles de Frédéric Launay intitulés « SRVCC-Single Radio Voice Call Continuity » (disponible sur http://blogs.univ-poitiers.fr/f-launay/2015/06/24/srvcc-single-radio-voice-call-continuity/) et « SRVCC-Single Radio Voice Call Continuity-Suite » (disponible sur http://blogs.univ-poitiers.fr/f-launay/tag/esrvcc/).

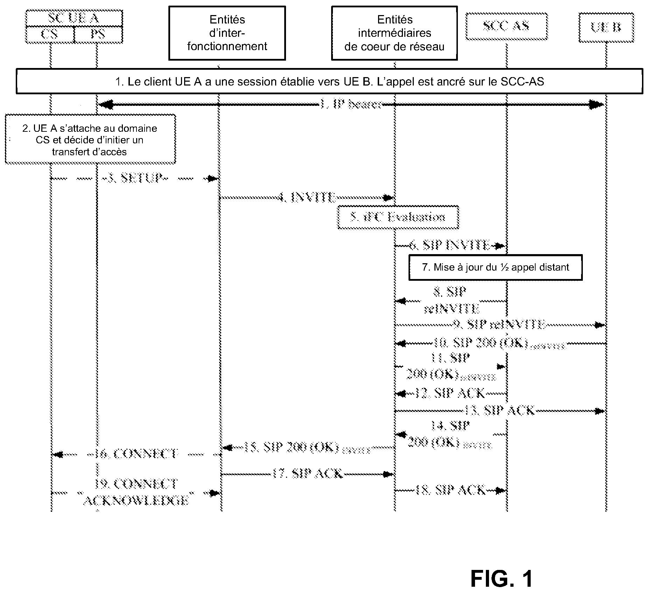

La **figure 1** (adaptée de la spécification TS 24.237 du 3GPP, section A.6.2) résume les échanges protocolaires classiques de la procédure SRVCC entre, d'une part, le domaine CS (équipements désignés « *Interworking entities* » sur la figure), et d'autre part les éléments de réseau IMS.

Dans les réseaux IMS, lorsqu'un dispositif-client UE A émet un appel vers un dispositif-client UE B, ou reçoit un appel d'un dispositif-client UE B, une requête d'appel SIP INVITE est transmise à un serveur S-CSCF ; l'exécution de la tâche associée (renvoi de la requête vers un Serveur d'Applications) dépend des règles de souscription de l'abonné, et cette tâche est effectuée en appliquant à l'appel la liste de règles définies sur la base des paramètres du filtre iFC mentionné ci-dessus.

Préalablement à la procédure SRVCC, l'appel a été ancré par le serveur SCC-AS mentionné ci-dessus, comme illustré à l'étape 1 de la figure 1 (lorsqu'un appel transite par un SCC-AS, on dit qu'il est « ancré » par le SCC-AS). Plus précisément, si l'on se place du côté du dispositif-client UE A à l'origine de l'appel, l'appel sera transmis d'abord au SCC-AS avant d'être traité par le Serveur d'Application de Téléphonie (« *Telephony Application Server* », ou TAS, en anglais) ; si l'on se place du côté du dispositif-client UE B destinataire de l'appel, l'appel est d'abord transmis au TAS, qui le transfère ensuite au SCC-AS.

Quand la station de base eNode B à laquelle est connecté le dispositif-client UE A détecte que le signal reçu par ce dispositif-client UE A est faible (étape 2), le MME responsable de ce dispositif-client UE A envoie une requête de basculement au réseau CS (étape 3). Pour ce faire, le MME doit être en mesure de :
- séparer le flux Data (PS) du flux Voix (géré par le mode CS après basculement),
- gérer le basculement des canaux virtuels (« *bearers* ») PS non-Voix vers le réseau cible, et
- initier la procédure de basculement SRVCC en s'appuyant sur le *bearer* Voix.

Une interface, nommée « Sv », entre le MSC et le MME permet au MME de :
- demander au MSC de réserver des ressources radio au niveau de l'interface d'accès radio CS ; le MSC est donc responsable de la réservation de ressources pour la continuité d'appel ; et
- donner au MSC un identifiant du SCC-AS afin que le MSC puisse émettre vers le SCC-AS une requête INVITE de demande de basculement pour le compte du dispositif-client UE A.

Lors de l'enregistrement du dispositif-client au réseau IMS, le MME a récupéré un identifiant appelé « STN-SR » (initiales des mots anglais « *Session Transfer Number for SRVCC* » signifiant « Numéro de Transfert de Session pour SRVCC ») de la part du serveur HSS (qui l'a lui-même reçu du SCC-AS). Il s'agit d'un numéro au format téléphonique E.164. C'est cet identifiant du SCC-AS qui est transmis par le MME au MSC afin que ce dernier puisse émettre ladite demande de basculement vers le SCC-AS.

Le MSC émet alors vers le réseau IMS une requête SIP INVITE de demande de transfert d'une session active, comprenant ledit numéro STN-SR ainsi que le numéro de téléphone public MSISDN de l'utilisateur du dispositif-client UE A (étape 4).

Le SCC-AS reçoit ensuite ladite requête INVITE (étape 6), et prend en charge le transfert de session. A partir de ce moment, le MME peut demander au dispositif-client UE A de basculer vers le réseau GSM ou UMTS. Le SCC-AS informe le client UE B du transfert d'accès pour la prise en compte des nouveaux flux média vers le MSC (étapes 7 à 13). Après le basculement, le SCC-AS envoie confirmation du succès de la procédure au MSC (étapes 14 et 15).

On va décrire à présent la procédure eSRVCC classique, en puisant dans l'article «Mind the coverage hole!» (disponible sur le site https://realtimecommunication.wordpress.com/2015/03/24/mind-the-coverage-hole/#more-380).

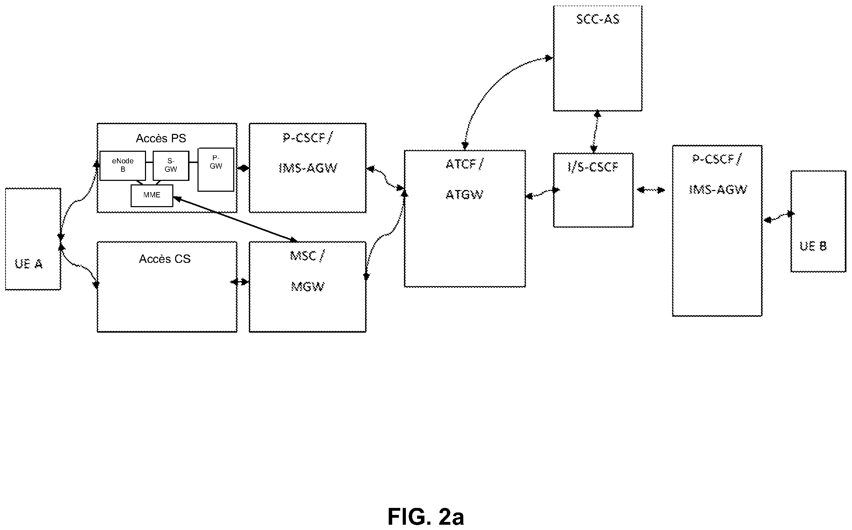

La procédure eSRVCC classique est décrite dans les spécifications GSMA IR.64, ainsi que TS 23.237 et TS 24.237 du 3GPP. L'architecture utilisée dans cette procédure est illustrée schématiquement sur la **figure 2a****.**

Comme mentionné ci-dessus, l'architecture eSRVCC comprend deux entités destinées à servir de points d'ancrage sur le segment d'accès au coeur de réseau. Ces entités sont les suivantes :
- l'ATCF agit comme point d'ancrage pour la signalisation SIP, et est placé dans le chemin de signalisation SIP entre un P-SCSF et un S-CSCF ; chaque ATCF est identifié par un numéro STN-SR ; le SCC-AS reçoit le STN-SR de l'ATCF en charge d'un abonné au moment de l'enregistrement de l'abonné, puis il le transmet au HSS ; le HSS le transmet à son tour vers le MME (comme dans le cadre de la procédure SRVCC décrite succinctement ci-dessus) ; et
- l'ATGW agit comme point d'ancrage pour le flux média; l'ATGW est contrôlé par l'ATCF ; l'ATGW est souvent co-localisé avec une passerelle média IMS-AGW.

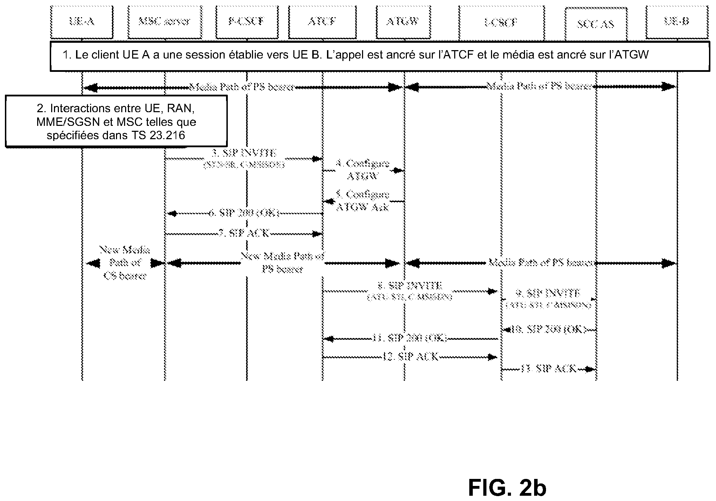

La **figure 2b** (adaptée de la spécification TS 24.237 du 3GPP, Section A.18.3) résume les échanges protocolaires classiques de la procédure eSRVCC entre le domaine CS et les éléments de réseau IMS.

Comme expliqué ci-dessus, lorsqu'un terminal mobile s'enregistre sur un réseau IMS, il émet une requête SIP REGISTER, qui est réceptionnée par un serveur P-CSCF. Selon la procédure eSRVCC, ce serveur P-CSCF transmet la requête SIP REGISTER à l'ATCF. Si le réseau d'origine du terminal mobile est compatible avec la procédure eSRVCC, l'ATCF décide, en fonction de la politique de l'opérateur, d'ancrer ou non la signalisation SIP.

S'il décide d'ancrer la signalisation, l'ATCF enrichit la requête SIP REGISTER initiale, notamment en s'incluant lui-même pour des sessions créées sur la base du présent enregistrement, et en ajoutant son URI (appelée ATCF-URI) dans le chemin de signalisation.

La requête SIP REGISTER ainsi enrichie est ensuite transmise par l'ATCF au serveur I-CSCF, qui la transmet au S-CSCF, puis le S-CSCF envoie au SCC-AS un message contenant la requête SIP REGISTER initiale dans le corps de message. Le SCC-AS prend en compte le numéro STN-SR de l'ATCF, et met à jour le serveur HSS. Le SCC-AS envoie ensuite à l'ATCF, dans le corps de message d'une requête selon la méthode SIP MESSAGE (décrite dans le document RFC 3428 de l'IETF) :
- le numéro de téléphone public MSISDN de l'utilisateur du dispositif-client UE A, et
- l'URI du SCC-AS, appelée ATU-STI (initiales des mots anglais « Access *Transfer Update* - *Session Transfer Identifier* » signifiant « Mise à jour de Transfert d'Accès - Identifiant de Transfert de Session »).

Une fois enregistré, le dispositif-client UE A peut établir une communication PS avec un dispositif-client UE B (étape 1 de la figure 2b).

Quand la station de base eNode B à laquelle est connecté le dispositif-client UE A détecte que le signal reçu par ce dispositif-client UE A est faible, le MME responsable de ce dispositif-client UE A envoie une requête de basculement au réseau CS (étape 2). La requête contient notamment le numéro STN-SR de l'ATCF, ainsi que le numéro de téléphone MSISDN de l'utilisateur. Le MSC/MGCF produit une requête SIP INVITE comprenant ce numéro STN-SR ainsi que ce numéro MSISDN, et l'envoie à l'ATCF (étape 3).

L'ATCF trouve le numéro MSISDN de l'utilisateur dans le champ « P-Asserted-Identity » de la requête INVITE reçue, et demande à l'ATGW les modifications de flux média requises (étapes 4 et 5). Puis l'ATCF envoie au SCC-AS, au moyen de l'ATU-STI (mentionné ci-dessus), une nouvelle requête SIP INVITE reproduisant l'en-tête (« *header* » en anglais) « Target-Dialog » identifiant le dialogue établi par la requête INVITE avant le basculement (étapes 8 et 9).

On notera que, dans les procédures SRVCC et eSRVCC décrites succinctement ci-dessus, le seul identifiant transmis par le domaine CS au coeur de réseau IMS (cf. l'étape 4 de la figure 1, ou l'étape 3 de la figure 2b) est le numéro de téléphone public MSISDN de l'utilisateur. Comme expliqué ci-dessus, il en résulte que, dans l'état de l'art, lorsque l'utilisateur dispose de plusieurs terminaux partageant la même identité publique, il n'est pas possible à partir de cette identité publique de déterminer l'identité privée du terminal ayant participé à une procédure de transfert d'accès.

On va décrire à présent des modes de réalisation de l'invention, dans lesquels le réseau considéré sera de type IMS, tel que décrit succinctement ci-dessus.

Dans ces modes de réalisation, l'identifiant IMSI sera de préférence délivré aux éléments concernés du réseau au moyen d'un en-tête SIP dédié, que l'on appellera « P-Associated-IMSI ». On pourra avoir par exemple :
P-Associated-IMSI: 208010123456789.

On connaît déjà, en fait, un en-tête permettant de fournir l'identifiant IMSI, mais cet en-tête est utilisé dans le cadre d'une fonction très spécifique de restauration en cas d'erreur : il s'agit de l'en-tête « Restoration-Info » défini dans la spécification TS 24.229 du 3GPP, Section 7.2.11. Aussi, la définition d'un nouvel en-tête est-elle préférée afin ne pas confondre les différents usages ; cependant, une nouvelle utilisation de l'en-tête Restoration-Info aux fins de la présente invention est également possible.

Par ailleurs, ces modes de réalisation introduisent des modifications par rapport à la procédure d'enregistrement classique d'un terminal sur un réseau IMS, comme on va l'expliquer à présent.

Un premier mode de réalisation concerne une procédure eSRVCC modifiée.

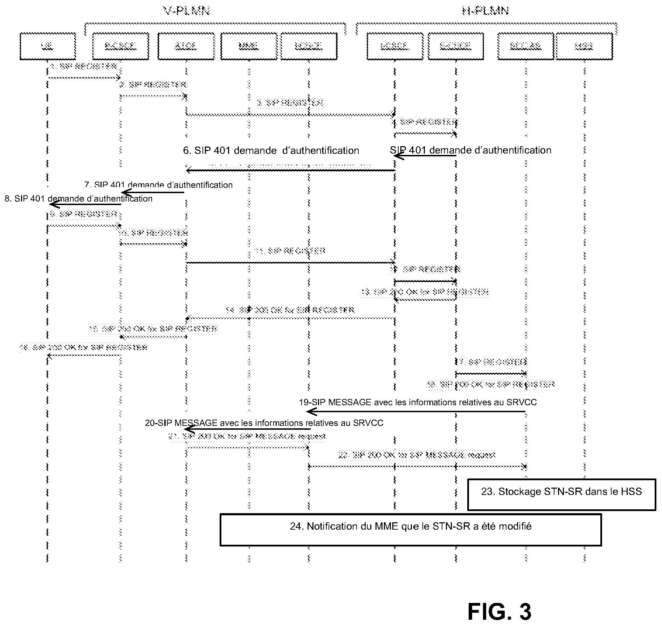

La procédure d'enregistrement classique d'un terminal au près d'un coeur de réseau IMS est illustrée sur la **figure 3** (adaptée de la spécification TS 24.237 du 3GPP, Section A.3.3). En l'occurrence, le terminal est en situation d'itinérance (« *roaming* » en anglais) ; il s'enregistre donc depuis un réseau visité (V-PLMN, pour Visited-Public Land Mobile Network) dans le réseau d'origine (H-PLMN, pour Home-Public Land Mobile Network) de l'utilisateur ; les entités (P-CSCF, ATCF) du réseau visité transmettent les demandes d'enregistrement vers les entités (I-CSCF, S-CSCF, SCC-AS, HSS) du réseau d'origine de l'utilisateur.

Tout d'abord, le serveur S-CSCF en charge de l'utilisateur obtient l'identifiant IMSI du terminal qui s'enregistre.

Selon une première variante, le serveur S-CSCF déduit l'identifiant IMSI de l'identité privée IMPI.

Selon une deuxième variante, conformément au document RFC 4740 de l'IETF, suite à l'étape 12 de la figure 3 (réception d'une requête « SIP REGISTER » par le serveur S-CSCF), prennent place les sous-étapes suivantes (non représentées sur la figure 3) :
- le serveur S-CSCF envoie au serveur HSS un message DIAMETER SAR (Server-Assignment-Request) dans lequel il indique, notamment, son nom en relation avec l'identité privée IMPI de l'utilisateur qu'il a pris en charge ; et
- le serveur S-CSCF reçoit de la part du serveur HSS, dans une réponse DIAMETER SAA (Server-Assignment-Answer), un complément de données concernant l'utilisateur en cours d'enregistrement (telles que des identités complémentaires, ou le profil de l'utilisateur) ; le serveur HSS fournit également dans cette réponse SAA (et plus précisément dans l'objet « User-Profile » de cette réponse SAA, comme spécifié dans la Section B1, mentionnée ci-dessus, de la norme TS 29.228) l'identifiant IMSI si ce dernier est disponible.

Le serveur S-CSCF pourra dès lors fournir l'identifiant IMSI aux éléments du réseau qui en ont besoin.

Par exemple, conformément à l'étape 13 de la figure 3, il est prévu classiquement que le serveur S-CSCF émette une réponse SIP 200 OK vers le serveur I-CSCF du réseau d'origine. Dans le présent mode de réalisation, le S-CSCF peut y insérer un en-tête P-Associated-IMSI (ou Restoration-Info) contenant l'identifiant IMSI. Ainsi, à l'étape 14 de la figure 3 (transmission du SIP 200 OK à l'ATCF), l'ATCF disposera de l'identifiant IMSI ; l'ATCF pourra alors diffuser cette information dans le contexte d'enregistrement associé à l'utilisateur.

Comme autre exemple, à l'étape 17 de la figure 3, il est prévu classiquement que le serveur S-CSCF transmette la requête SIP REGISTER au SCC-AS. Dans le présent mode de réalisation, le serveur S-CSCF peut y insérer un en-tête P-Associated-IMSI (ou Restoration-Info) contenant l'identifiant IMSI. Le SCC-AS est ainsi informé de l'identifiant IMSI du terminal qui s'enregistre, et pourra alors diffuser cette information dans le contexte d'enregistrement de l'utilisateur. Par exemple, lors de l'émission de la requête SIP MESSAGE (étapes 19 et 20 de la figure 3) vers l'ATCF, le serveur SCC-AS pourra insérer l'identifiant IMSI dans le corps de cette requête ou dans un en-tête P-Associated-IMSI (ou Restoration-Info) de cette requête.

Le SCC-AS et l'ATCF disposent alors, dans le contexte d'enregistrement du terminal qui vient de s'enregistrer, de l'ensemble des identités publiques « non-barrées » (c'est-à-dire, utilisables par le terminal pour établir des appels) du terminal, de l'adresse de contact du terminal, et de son identifiant IMSI.

Un deuxième mode de réalisation concerne une procédure SRVCC modifiée.

Les modifications par rapport à l'enregistrement classique sont analogues à celles décrites ci-dessus en référence au premier mode de réalisation. On rappelle que l'architecture SRVCC ne comprend pas d'entité ATCF ; par conséquent, les étapes 19 à 24 de la figure 3 n'existent pas.

Tout d'abord, le serveur S-CSCF en charge de l'utilisateur obtient l'identifiant IMSI du terminal qui s'enregistre comme décrit ci-dessus dans le cadre du premier mode de réalisation.

Le serveur S-CSCF peut dès lors fournir l'identifiant IMSI aux éléments du réseau qui en ont besoin.

Par exemple, le serveur S-CSCF émet une réponse SIP 200 OK vers le serveur I-CSCF du réseau d'origine, dans laquelle le serveur S-CSCF insère un en-tête P-Associated-IMSI (ou Restoration-Info) contenant l'identifiant IMSI. Le serveur I-CSCF pourra alors transmettre cette réponse SIP 200 OK au serveur P-CSCF en charge du terminal qui s'enregistre. La connaissance par le serveur P-CSCF de l'identifiant IMSI d'un terminal peut être notamment utile lorsque ce terminal est en situation d'itinérance, comme illustré sur la figure 3. De plus, le serveur P-CSCF peut, dans le cas d'une configuration multi-terminaux, générer un procès-verbal d'appel (« *Call Detail Record*»*,* ou CDR, en anglais) et/ou des statistiques relatives à un terminal particulier (identifié par son identifiant IMSI) de l'ensemble de terminaux ; il est alors possible de distinguer chacun des terminaux de l'utilisateur au niveau des systèmes d'information et de facturation de l'opérateur réseau.

Comme autre exemple, lorsque le serveur S-CSCF transmet la requête SIP REGISTER au SCC-AS, le serveur S-CSCF peut y insérer un en-tête P-Associated-IMSI (ou Restoration-Info) contenant l'identifiant IMSI. Le SCC-AS est ainsi informé de l'identifiant IMSI du terminal qui s'enregistre.

Le SCC-AS dispose alors, dans le contexte d'enregistrement du terminal qui vient de s'enregistrer, de l'ensemble des identités publiques non-barrées du terminal, de l'adresse de contact du terminal, et de son identifiant IMSI.

On notera que les procédures d'enregistrement que l'on vient de décrire pour les procédures eSRVCC et SRVCC sont en particulier applicables dans le cas d'une configuration multi-terminaux.

Lors de l'établissement d'une session entre deux utilisateurs comme décrit en étape 1 des figures 1 et 2b, et préalablement à la réception d'une requête de transfert d'accès, le SCC-AS et l'ATCF seront donc en mesure de déterminer, parmi la pluralité des terminaux de chacun des utilisateurs appelant et appelé, lequel est utilisé pour établir cette session. En effet, les informations stockées dans les contextes d'enregistrement de l'ATCF et du SCC-AS permettent de faire l'association entre les adresses de contact de chacun des terminaux, leurs identifiants IMSI respectifs et les identités publiques utilisées pour l'établissement de cette session.

On va expliquer à présent, dans le cadre de l'application de l'invention au basculement d'une communication depuis un réseau LTE connecté à un réseau IMS vers un réseau GSM ou UMTS connecté au même réseau IMS, comment s'opère un changement de réseau mobile pour l'un de ces terminaux.

La procédure qui se déroule dans le coeur de réseau mobile (« Evolved Packet Core », ou EPC, en anglais) lors d'un transfert d'accès est décrite dans les spécifications TS 23.401 et TS 29.280 du 3GPP. Comme mentionné ci-dessus, cette procédure comprend notamment le basculement de la communication depuis un centre de gestion MME du réseau LTE vers un centre de gestion MSC du réseau GSM ou UMTS. Selon la Table 5.2.2 de ladite spécification TS 29.280, les informations qui sont transmises au centre de gestion MSC pendant le basculement comprennent notamment l'identifiant IMSI du terminal concerné.

Or, dans l'état de l'art, cet identifiant IMSI n'est pas transmis par le centre de gestion MSC au coeur de réseau IMS (ATCF ou SCC-AS) (cf. requête SIP INVITE à l'étape 4 de la figure 1, ou à l'étape 3 de la figure 2b).

Selon la présente application de l'invention, le centre de gestion MSC utilise l'en-tête SIP « P-Associated-IMSI » (ou l'en-tête SIP « Restoration-Info ») afin d'émettre vers le coeur de réseau IMS l'identifiant IMSI (obtenu conformément à la spécification TS 29.280) relatif au terminal faisant l'objet d'un transfert d'accès. Cette information est alors exploitée conjointement au numéro de téléphone MSISDN, soit par le SCC-AS suite à la réception de la requête INVITE à l'étape 6 de la figure 1 dans le cas d'une procédure SRVCC, soit par l'ATCF suite à la réception de la requête SIP INVITE à l'étape 3 de la figure 2b dans le cas d'une procédure eSRVCC.

Dans le cas du premier mode de réalisation de l'invention (procédure eSRVCC modifiée), l'ATCF complète alors le contexte d'utilisateur initialisé suite à la réception de la réponse SIP 200 OK lors de l'étape 14 de la figure 3. Comme l'ATCF a préalablement stocké la correspondance entre l'identifiant IMSI et l'adresse de contact de chaque terminal de l'utilisateur, l'ATCF est en mesure de déterminer sans ambigüité le terminal concerné par la procédure de transfert d'accès.

Dans le cas du deuxième mode de réalisation de l'invention (procédure SRVCC modifiée), l'identifiant IMSI est utilisé par le SCC-AS pour compléter le contexte d'utilisateur initialisé suite à la réception de la requête d'enregistrement SIP REGISTER (étape équivalente à l'étape 17 de la figure 3). Comme le SCC-AS a préalablement stocké la correspondance entre l'identifiant IMSI et l'adresse de contact de chaque terminal de l'utilisateur, le SCC-AS est en mesure de déterminer sans ambigüité le terminal concerné par la procédure de transfert d'accès.

On notera que la présente invention peut être mise en oeuvre au sein des noeuds d'un réseau IP, par exemple des serveurs d'enregistrement ou des entités de contrôle des transferts d'accès, au moyen de composants logiciels et/ou matériels, tels que des circuits électroniques.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés de changement de réseau mobile selon l'invention.

En effet, l'invention vise aussi un programme d'ordinateur téléchargeable depuis un réseau de communication comprenant des instructions pour l'exécution des étapes d'un procédé de changement de réseau mobile selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de changement de réseau mobile selon l'invention.

## Revendications

1. Procédé de changement de réseau mobile, comprenant les étapes suivantes :
- détection qu'il devient nécessaire de basculer une communication à laquelle participe un terminal depuis un premier réseau mobile connecté à un réseau IP, Internet Protocol, vers un second réseau mobile connecté au même réseau IP,
- transmission par un premier centre de gestion appartenant audit premier réseau mobile à un second centre de gestion appartenant audit second réseau mobile de l'identifiant IMSI, International Mobile Subscriber Identity, dudit terminal,
- envoi dudit identifiant IMSI au réseau IP par ledit second centre de gestion, et
- réception par une entité de contrôle des transferts d'accès du réseau IP d'une requête de changement de réseau mobile concernant ledit terminal et contenant ledit identifiant IMSI, le procédé comprend en outre une étape d'identification de l'adresse de contact du terminal par ladite entité de contrôle des transferts d'accès au moyen de l'identifiant IMSI, le procédé **caractérisé en ce que**, lors de l'enregistrement dudit terminal auprès dudit réseau IP, un serveur d'enregistrement en charge de l'exécution des services de contrôle de sessions pour le terminal a obtenu ledit identifiant IMSI et l'a fait parvenir à ladite entité de contrôle des transferts d'accès.

2. Procédé de changement de réseau mobile selon la revendication 1, **caractérisé en ce que**, après avoir obtenu ledit identifiant IMSI, ledit serveur d'enregistrement le fait parvenir à une entité SCC-AS, Service Centralization and Continuity.

3. Procédé de changement de réseau mobile selon la revendication 2, **caractérisé en ce que**, après avoir reçu ledit identifiant IMSI, ladite entité SCC-AS le transmet à une entité ATCF, Access Transfer Control Function.

4. Procédé de changement de réseau mobile selon la revendication 1, **caractérisé en ce que**, après avoir obtenu ledit identifiant IMSI, ledit serveur d'enregistrement le fait parvenir à une entité ATCF.

5. Entité de contrôle des transferts d'accès dans un réseau IP, Internet Protocol, constituée par une entité SCC-AS, Service Centralization and Continuity, et comprenant des moyens pour :
recevoir et enregistrer l'identifiant IMSI, International Mobile Subscriber Identity, d'un terminal envoyé par un serveur d'enregistrement en charge de l'exécution des services de contrôle de sessions pour ledit terminal lors de l'enregistrement dudit terminal auprès dudit réseau IP ;
recevoir une requête de changement de réseau mobile concernant ledit terminal, ladite requête contenant ledit identifiant IMSI dudit terminal, et
identifier l'adresse de contact du terminal au moyen dudit identifiant IMSI.

6. Entité de contrôle des transferts d'accès dans un réseau IP, Internet Protocol, constituée par une entité ATCF, Access Transfer Control Function, et comprenant des moyens pour recevoir et enregistrer l'identifiant IMSI, International Mobile Subscriber Identity, d'un terminal envoyé par un serveur d'enregistrement en charge de l'exécution des services de contrôle de sessions pour ledit terminal, lors de l'enregistrement dudit terminal auprès dudit réseau IP, ou par une entité SCC-AS, Service Centralization and Continuity, à laquelle ledit serveur d'enregistrement en charge du terminal a envoyé ledit identifiant IMSI lors de l'enregistrement dudit terminal auprès dudit réseau IP, ladite entité ATCF comprenant en outre des moyens pour :
- recevoir une requête de changement de réseau mobile concernant ledit terminal, ladite requête contenant ledit identifiant IMSI dudit terminal, et
- identifier l'adresse de contact du terminal au moyen dudit identifiant IMSI.

7. Système de communication dans un réseau IP, Internet Protocol, comprenant :
- au moins une entité de contrôle des transferts d'accès selon la revendication 5 ou 6 ; et
- au moins un serveur d'enregistrement en charge de l'exécution des services de contrôle de sessions pour ledit terminal et comprenant des moyens pour, lors de l'enregistrement auprès dudit réseau IP d'un terminal dont ledit serveur d'enregistrement a la charge, obtenir l'identifiant IMSI, International Mobile Subscriber Identity, dudit terminal et le faire parvenir à ladite entité de contrôle des transferts d'accès, ou lorsque ladite entité de contrôle des transferts d'accès est constituée d'une entité ATCF, à une entité SCC-AS, Service Centralization and Continuity, apte à transmettre ledit identifiant IMSI à ladite entité ATCF.

8. Moyen de stockage de données inamovible, ou partiellement ou totalement amovible, comportant des instructions de code de programme informatique pour gérer le fonctionnement d'une entité de contrôle des transferts d'accès selon la revendication 5 ou 6.

9. Programme d'ordinateur téléchargeable depuis un réseau de communications et/ou stocké sur un support lisible par ordinateur et/ou exécutable par un microprocesseur, **caractérisé en ce qu'**il comprend des instructions pour gérer le fonctionnement d'une entité de contrôle des transferts d'accès selon la revendication 5 ou 6, lorsqu'il est exécuté sur un ordinateur.

## Patentansprüche

1. Verfahren zum Wechseln eines Mobilnetzes, das die folgenden Schritte beinhaltet:
- Detektieren der Notwendigkeit, eine Kommunikation, an der ein Endgerät teilnimmt, von einem ersten Mobilnetz, das mit einem IP, Internet Protocol,-Netz verbunden ist, zu einem zweiten Mobilnetz, das mit demselben IP-Netz verbunden ist, umzuschalten,
- Übertragen, durch ein erstes Verwaltungszentrum, das zu dem ersten Mobilnetz gehört, an ein zweites Verwaltungszentrum, das zu dem zweiten Mobilnetz gehört, der IMSI, International Mobile Subscriber Identity,-Kennung des Endgeräts,
- Senden der IMSI-Kennung an das IP-Netz durch das zweite Verwaltungszentrum und
- Empfangen, durch eine Entität zur Steuerung der Zugriffstransfers des IP-Netzes, einer Anfrage nach einem Mobilnetzwechsel, die das Endgerät betrifft und die IMSI-Kennung enthält, wobei das Verfahren ferner einen Schritt des Identifizierens der Kontaktadresse des Endgeräts durch die Entität zur Steuerung der Zugriffstransfers mit Hilfe der IMSI-Kennung beinhaltet, wobei das Verfahren **dadurch gekennzeichnet ist, dass** bei der Registrierung des Endgeräts in dem IP-Netz ein Registrierungsserver, der für die Ausführung der Dienste zur Steuerung von Sitzungen für das Endgerät zuständig ist, die IMSI-Kennung erhalten und an die Entität zur Steuerung der Zugriffstransfers weitergeleitet hat.

2. Verfahren zum Wechseln eines Mobilnetzes nach Anspruch 1, **dadurch gekennzeichnet, dass** nach dem Erhalt der IMSI-Kennung der Registrierungsserver diese an eine SCC-AS, Service Centralization and Continuity,-Entität weiterleitet.

3. Verfahren zum Wechseln eines Mobilnetzes nach Anspruch 2, **dadurch gekennzeichnet, dass** nach dem Empfang der IMSI-Kennung die SCC-AS-Entität diese an eine ATCF, Access Transfer Control Function,-Entität überträgt.

4. Verfahren zum Wechseln eines Mobilnetzes nach Anspruch 1, **dadurch gekennzeichnet, dass** nach dem Erhalt der IMSI-Kennung der Registrierungsserver diese an eine ATCF-Entität weiterleitet.

5. Entität zur Steuerung der Zugriffstransfers in einem IP, Internet Protocol,-Netz, die aus einer SCC-AS, Service Centralization and Continuity,-Entität besteht und Mittel für Folgendes beinhaltet:
Empfangen und Registrieren der IMSI, International Mobile Subscriber Identity,-Kennung eines Endgeräts, die durch einen Registrierungsserver, der für die Ausführung der Dienste zur Steuerung von Sitzungen für das Endgerät zuständig ist, bei der Registrierung des Endgeräts in dem IP-Netz gesendet wird;
Empfangen einer Anfrage nach einem Mobilnetzwechsel, die das Endgerät betrifft, wobei die Anfrage die IMSI-Kennung des Endgeräts enthält, und
Identifizieren der Kontaktadresse des Endgeräts mit Hilfe der IMSI-Kennung.

6. Entität zur Steuerung der Zugriffstransfers in einem IP, Internet Protocol,-Netz, die aus einer ATCF, Access Transfer Control Function,-Entität besteht und Mittel zum Empfangen und Registrieren der IMSI, International Mobile Subscriber Identity,-Kennung eines Endgeräts beinhaltet, die durch einen Registrierungsserver, der für die Ausführung der Dienste zur Steuerung von Sitzungen für das Endgerät zuständig ist, bei der Registrierung des Endgeräts in dem IP-Netz oder durch eine SCC-AS, Service Centralization and Continuity,-Entität, an die der Registrierungsserver, der für das Endgerät zuständig ist, die IMSI-Kennung bei der Registrierung des Endgeräts in dem IP-Netz gesendet hat, gesendet wird, wobei die ATCF-Entität ferner Mittel für Folgendes beinhaltet:
- Empfangen einer Anfrage nach einem Mobilnetzwechsel, die das Endgerät betrifft, wobei die Anfrage die IMSI-Kennung des Endgeräts enthält, und
- Identifizieren der Kontaktadresse des Endgeräts mit Hilfe der IMSI-Kennung.

7. Kommunikationssystem in einem IP, Internet Protocol,-Netz, das Folgendes beinhaltet:
- mindestens eine Entität zur Steuerung der Zugriffstransfers nach Anspruch 5 oder 6; und
- mindestens einen Registrierungsserver, der für die Ausführung der Dienste zur Steuerung von Sitzungen für das Endgerät zuständig ist und Mittel beinhaltet, um bei der Registrierung, in dem IP-Netz, eines Endgeräts, für das der Registrierungsserver zuständig ist, die IMSI, International Mobile Subscriber Identity,-Kennung des Endgeräts zu erhalten und diese an die Entität zur Steuerung der Zugriffstransfers, oder, wenn die Entität zur Steuerung der Zugriffstransfers aus einer ATCF-Entität besteht, an eine SCC-AS, Service Centralization and Continuity,-Entität, die dazu fähig ist, die IMSI-Kennung an die ATCF-Entität zu übertragen, weiterzuleiten.

8. Nicht entnehmbares oder teilweise oder vollständig entnehmbares Datenspeichermedium, das Computerprogrammcodeanweisungen zur Verwaltung des Betriebs einer Entität zur Steuerung der Zugriffstransfers nach Anspruch 5 oder 6 umfasst.

9. Computerprogramm, das über ein Kommunikationsnetz herunterladbar ist und/oder auf einem computerlesbaren Medium gespeichert ist und/oder von einem Mikroprozessor ausführbar ist, **dadurch gekennzeichnet, dass** es Anweisungen beinhaltet, um den Betrieb einer Entität zur Steuerung der Zugriffstransfers nach Anspruch 5 oder 6 zu verwalten, wenn es auf einem Computer ausgeführt wird.

## Claims

1. Method for changing mobile network, comprising the following steps:
- detecting that it becomes necessary to hand over a communication in which a terminal participates from a first mobile network connected to an IP, Internet Protocol, network, to a second mobile network connected to the same IP network,
- a first management centre belonging to said first mobile network transmitting, to a second management centre belonging to said second mobile network, the IMSI, International Mobile Subscriber Identity, identifier of said terminal,
- said second management centre sending said IMSI identifier to the IP network, and
- an access transfer control entity of the IP network receiving a request to change mobile network relating to said terminal and containing said IMSI identifier, the method further comprising a step of said access transfer control entity identifying the contact address of the terminal by means of the IMSI identifier, the method being **characterized in that**, during the registration of said terminal with said IP network, a registration server in charge of executing the session control services for the terminal obtained said IMSI identifier and forwarded it to said access transfer control entity.

2. Method for changing mobile network according to Claim 1, **characterized in that**, after having obtained said IMSI identifier, said registration server forwards it to an SCC-AS, Service Centralization and Continuity, entity.

3. Method for changing mobile network according to Claim 2, **characterized in that**, after having received said IMSI identifier, said SCC-AS entity transmits it to an ATCF, Access Transfer Control Function, entity.

4. Method for changing mobile network according to Claim 1, **characterized in that**, after having obtained said IMSI identifier, said registration server forwards it to an ATCF entity.

5. Access transfer control entity in an IP, Internet Protocol, network, consisting of an SCC-AS, Service Centralization and Continuity, entity and comprising means for:
receiving and registering the IMSI, International Mobile Subscriber Identity, identifier of a terminal sent by a registration server in charge of executing the session control services for said terminal during the registration of said terminal with said IP network;
receiving a request to change mobile network relating to said terminal, said request containing said IMSI identifier of said terminal, and
identifying the contact address of the terminal by means of said IMSI identifier.

6. Access transfer control entity in an IP, Internet Protocol, network, consisting of an ATCF, Access Transfer Control Function, entity and comprising means for receiving and registering the IMSI, International Mobile Subscriber Identity, identifier of a terminal sent by a registration server in charge of executing the session control services for said terminal, during the registration of said terminal with said IP network, or by an SCC-AS, Service Centralization and Continuity, entity, to which said registration server in charge of the terminal sent said IMSI identifier during the registration of said terminal with said IP network, said ATCF entity further comprising means for:
- receiving a request to change mobile network relating to said terminal, said request containing said IMSI identifier of said terminal, and
- identifying the contact address of the terminal by means of said IMSI identifier.

7. Communication system in an IP, Internet Protocol) network, comprising:
- at least one access transfer control entity according to Claim 5 or 6; and
- at least one registration server in charge of executing the session control services for said terminal and comprising means for, during the registration of a terminal which said registration server is in charge of with said IP network, obtaining the IMSI, International Mobile Subscriber Identity, identifier of said terminal and forwarding it to said access transfer control entity or, when said access transfer control entity consists of an ATCF entity, to an SCC-AS, Service Centralization and Continuity, entity able to transmit said IMSI identifier to said ATCF entity.

8. Irremovable, or partially or totally removable, data storage means, comprising computer program code instructions for managing the operation of an access transfer control entity according to Claim 5 or 6.

9. Computer program which can be downloaded from a communications network and/or stored on a computer-readable medium and/or can be executed by a microprocessor, **characterized in that** it comprises instructions for managing the operation of an access transfer control entity according to Claim 5 or 6, when it is executed on a computer.
